# FASCICULE DE BREVET EUROPEEN

(11) **EP 1 826 090 B1**
(45) Date de publication et mention de la délivrance du brevet: **22.12.2010**
(21) Numéro de dépôt: 07003081.2
(22) Date de dépôt: 14.02.2007
(51) Int. Cl.: B60W 50/00, B60C 23/04

(54) **Procédé de contrôle des caractéristiques de fonctionnement d'un boîtier électronique destiné à équiper une roue de véhicule**
Verfahren zur Steuerung von Betriebsfunktionen eines elektronischen Gehäuses, mit dem ein Fahrzeugrad ausgerüstet werden soll
Method of controlling the operational characteristics of a pressure monitoring module intended for equipping a wheel of a vehicle

(30) Priorité: 28.02.2006 FR 0601730
(43) Date de publication de la demande: 29.08.2007
(73) Titulaire: Continental Automotive France, 31100 Toulouse (FR)
(72) Inventeur: Costes, Olivier, 31270 Cugnaux (FR)
(74) Mandataire: Bonn, Roman Klemens

(56) Documents cités:
- EP-A2- 1 172 237
- WO-A-02/07993

## Description

L'invention concerne un procédé de contrôle des caractéristiques de fonctionnement d'un boîtier électronique destiné à équiper une roue d'un véhicule

De plus en plus de véhicules automobiles possèdent des systèmes de surveillance comportant des capteurs montés sur chacune des roues de véhicules, dédiés à la mesure de paramètres, tels que pression et/ou température des pneumatiques équipant ces roues, et destinés à informer le conducteur de toute variation anormale du paramètre mesuré.

Ces systèmes de surveillance comportent classiquement :
- monté sur chacune des roues du véhicule, un boîtier électronique intégrant les capteurs de mesure, un microprocesseur et un émetteur radiofréquence,
- et, montée sur le véhicule, une unité centrale de réception des signaux émis par les boîtiers électroniques, dotée d'un calculateur intégrant un récepteur radiofréquence connecté à une antenne.

De plus, de façon usuelle, les boîtiers électroniques sont adaptés pour émettre périodiquement, à destination de l'unité centrale, des trames de données représentatives des paramètres de fonctionnement de la roue. Ces trames de données sont émises selon une procédure d'émission de trains de trames consistant à commander n émissions successives de la dite trame de données.

Parmi les caractéristiques de fonctionnement que doivent satisfaire de tels systèmes de surveillance, figure notamment l'obligation de détecter les éventuels défauts de fonctionnement des boîtiers électroniques, en vue d'informer de la nécessité de procéder au remplacement de ces derniers.

A l'heure actuelle, la procédure de détection classique mise en oeuvre consiste à programmer l'unité centrale de façon, pour chaque boîtier électronique :
- à vérifier l'acquisition périodique par la dite unité centrale d'une trame de données en provenance de ce boîtier électronique,
- et en l'absence d'acquisition de trames de données pendant une période de temps donnée au cours de laquelle l'unité centrale aurait dû logiquement recevoir x trames de données successives, avec x prédéterminé par exemple égal à dix, à délivrer un signal d'information concernant la nécessité de changer le boîtier électronique.

Le principal inconvénient de cette procédure de détection réside dans le fait qu'elle est uniquement conçue pour constater le défaut de fonctionnement des boîtiers électroniques ou plus exactement la non réception par l'unité centrale de trames en provenance d'un boîtier donné pendant un laps de temps prédéterminé. Cette procédure de détection n'offre donc pas la possibilité d'intervenir de façon préventive avant l'apparition effective de ce défaut.

Une autre technique actuelle vise à pallier cet inconvénient dans le cadre d'un défaut de fonctionnement résultant d'une défaillance (état de fin de vie) de la pile d'alimentation électrique intégrée dans le boîtier électronique, défaillance qui s'avère, dans la pratique, constituer la cause la plus fréquente des dysfonctionnements des dits boîtiers électroniques.

Cette technique vise à établir des logiciels de diagnostic adaptés pour permettre d'anticiper, lors de l'utilisation de la pile, le moment où cette dernière parvient dans un état de fin de vie.

Toutefois, compte tenu des nombreux paramètres rentrant en jeu (profil d'utilisation, température d'utilisation, ...) de telles techniques sont difficiles à mettre en oeuvre, et s'avèrent actuellement d'une fiabilité très relative.

Il est déjà connu du document WO 02/07993, sur lequel document s'appuyent les termes du préambule de la revendication 1, de contrôler l'intégrité des trames transmises à l'unité centrale en effectuant une vérification de la somme de contrôle (checksum) ou par une procédure de contrôle de redondance cyclique (CRC). Cependant ce type de contrôle ne permet pas d'établir si une trame a bien été reçue, il permet uniquement de vérifier que celles qui ont été reçues, sont correctes.

Le document EP 1 172 237 montre qu'il est possible en utilisant une technique d'étalement de spectre de s'affranchir du bruit ambiant et donc des perturbations du signal. Là encore ce procédé ne permet pas de s'assurer qu'une trame a bien été reçue, même s'il limite les mauvaises réceptions.

La présente invention vise à pallier les inconvénients précités des techniques actuelles de détection des défauts de fonctionnement des boîtiers électroniques, et a pour premier objectif de fournir un procédé adapté pour diagnostiquer, à titre préventif, un état de fin de vie d'une pile, et pour prévenir de la nécessité qui s'en suit de procéder au changement de ces boîtiers électroniques.

Un autre objectif de l'invention est de fournir un procédé adapté pour permettre de diagnostiquer, à titre préventif, les défaillances des capteurs de mesure intégrés classiquement dans les boîtiers électroniques de diagnostic.

A cet effet, l'invention vise, en premier lieu, un procédé de contrôle des caractéristiques de fonctionnement d'un boîtier électronique destiné à équiper une roue d'un véhicule et adapté pour émettre, à destination d'une unité centrale montée sur le dit véhicule, des trames de données représentatives de paramètres de fonctionnement de la dite roue, selon une procédure d'émission de trains de trames, consistant à commander n émissions successives de la chaque trame de données. Selon l'invention, ce procédé de contrôle consiste :
- à analyser, lors de l'émission de chaque train de trames, le nombre m de trames de données effectivement acquises par l'unité centrale de façon à déduire des analyses successives un taux de réception Tr représentatif du rapport Σm / Σn : somme des trames acquises / somme des trames dont l'émission a été commandée,
- et à commander l'émission, par l'unité centrale, d'une information préventive lorsque le taux de réception Tr devient inférieur à un seuil de réception prédéterminé.

Le principe à la base de l'invention a été de mettre en lumière une corrélation entre l'état de charge des piles intégrées dans les boîtiers électroniques, et la qualité des émissions des trames de données effectuées par ces boîtiers électroniques, corrélation qui se traduit dans la pratique par :
- une réception par l'unité centrale des n émissions commandées en vue de la transmission de chaque trame de données, pour des états de charge satisfaisants des piles,
- et une dégradation du nombre de trames de données effectivement reçues par l'unité centrale lors de chaque émission de trains de trames, au fur et à mesure de la diminution de l'état de charge des piles. Dans ce cas le nombre de trames effectivement reçues par l'unité centrale est inférieur au nombre de trames dont l'émission a été commandée.

Sur la base de ce principe, le procédé selon l'invention a consisté à calculer un taux de réception Tr représentatif du rapport Σm **/** Σn (somme des trames acquises / somme des trames dont l'émission a été commandée), et à commander le changement des piles lorsque ce taux de réception Tr devient inférieur à un seuil prédéterminé.

Un tel procédé de contrôle permet donc de diagnostiquer, à titre préventif, un état de fin de vie d'une pile, et de prévenir de la nécessité qui s'en suit de procéder au changement du boîtier électronique intégrant cette pile.

Selon un mode de mise en oeuvre avantageux de l'invention visant la détermination des taux de réception Tr, on détermine des fenêtres temporelles d'analyse d'une durée prédéterminée, au terme de chacune desquelles on calcule un taux de réception Tr correspondant aux trames émises lors de la dite fenêtre d'analyse.

De plus, sur la base de ce principe de détermination des taux de réception Tr, on déclenche avantageusement l'ouverture d'une fenêtre d'analyse lors de chaque procédure d'émission d'un train de trames de données, chaque fenêtre d'analyse ouverte couvrant une période de temps prédéterminée précédent le dit déclenchement.

Ainsi, les fenêtres d'analyse sont régulièrement rafraîchies, le mode de glissement utilisé pour effectuer ce rafraîchissement garantissant la prise en compte de toutes les émissions de trains de trames de données.

Selon un autre aspect avantageux, l'invention vise un procédé de contrôle des caractéristiques de fonctionnement d'un boîtier électronique intégrant au moins un capteur de mesure, et adapté pour détecter les éventuels défauts physiques de chaque capteur de mesure et pour émettre des trames de données comportant, pour chaque capteur, une donnée représentative de l'état physique du dit capteur.

Selon l'invention, le procédé de contrôle consiste alors, avantageusement pour chaque capteur de mesure :
- pour chaque trame de données transmise, à analyser la donnée représentative de l'état physique du dit capteur de mesure, de façon à déduire des analyses successives un taux d'erreur Te représentatif du pourcentage de trames de données incorporant une donnée d'état physique représentative d'un défaut physique,
- et à commander l'émission, par l'unité centrale, d'une information préventive lorsque le taux d'erreur Te devient supérieur à un seuil d'erreur prédéterminé.

Selon cet aspect de l'invention, le procédé de contrôle consiste, pour chaque capteur de mesure intégré dans un boîtier électronique, à comptabiliser les défauts intermittents de ce dernier et à analyser l'évolution de la fréquence d'apparition de ces défauts intermittents.

Selon ce principe, le procédé de contrôle selon l'invention permet donc de diagnostiquer, à titre préventif, les défaillances totales des capteurs de mesure intégrés classiquement dans les boîtiers électroniques, et de prévenir de la nécessité qui s'en suit de procéder au changement des boîtiers électroniques intégrant ces capteurs de mesure.

Ainsi, le procédé selon l'invention permet de :
- contrôler l'évolution de l'état des deux principaux types de composants, pile et capteurs de mesure, intégrés dans les boîtiers électroniques, susceptibles d'être à l'origine de défauts de fonctionnement des dits boîtiers électroniques,
- et de diagnostiquer, à titre préventif, grâce à ce suivi, l'état de fin de vie de la pile et les défaillances totales des capteurs de mesure, et de prévenir ainsi de la nécessité qui s'en suit de procéder au changement de ces boîtiers électroniques.

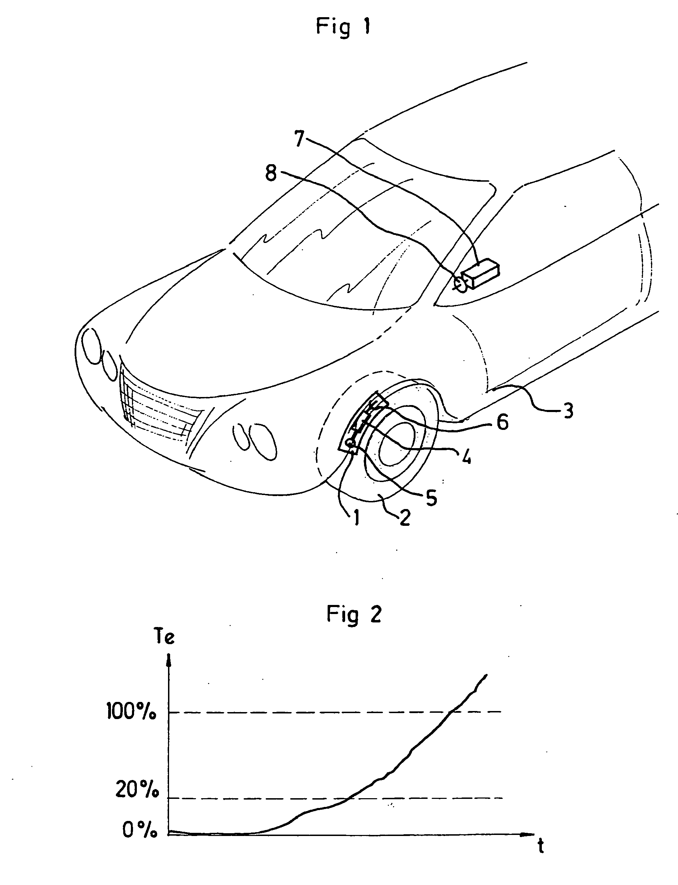

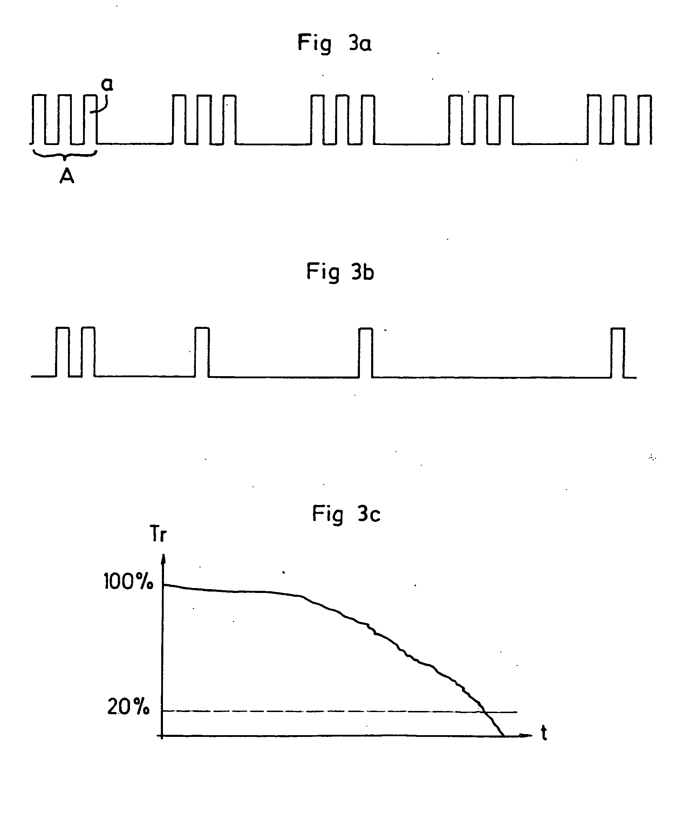

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :
- **la** **figure 1** est une vue en perspective partielle et schématique d'un véhicule équipé d'un système de surveillance conforme à l'invention,
- **la** **figure 2** est une courbe représentative de l'évolution du taux d'erreur Te tel que défini selon l'invention, fonction de l'état physique d'un capteur de mesure intégré dans un boîtier électronique,
- **les** **figures 3a et 3b** sont deux graphiques représentant des exemples de transmission de trames de données successives, respectivement pour un état de charge satisfaisant (figure 3a) et un état de charge dégradé (figure 3b) d'une pile intégrée dans un boîtier électronique,
- **et la** **figure 3c** est une courbe représentative de l'évolution du taux de réception Tr tel que défini selon l'invention, fonction de l'état de charge d'une pile intégrée dans un boîtier électronique.

Le système de surveillance mettant en oeuvre le procédé de contrôle selon l'invention est représenté, sur la figure 1, monté sur un véhicule 3 muni de quatre roues 2 chaussées classiquement chacune d'un pneumatique.

De tels systèmes de surveillance comportent classiquement, en premier lieu, associé à chaque roue 2, un boîtier électronique tel que 1, par exemple solidarisé sur la jante de la dite roue de façon à être positionné à l'intérieur de l'enveloppe du pneumatique.

Chacun de ces boîtiers électroniques 1 intègre des capteurs dédiés à la mesure de paramètres, tels que pression, température, accélération... connectés à une unité de calcul à microprocesseur 4 alimentée électriquement au moyen d'une pile-bouton 5 telle que pile lithium/manganèse, et reliée à un émetteur RF connecté à une antenne 6 basse fréquence.

Le système de surveillance comprend, également, un calculateur centralisé ou unité centrale 7, située dans le véhicule et comportant un microprocesseur et intégrant un récepteur RF apte à recevoir les signaux émis par chacun des quatre boîtiers électroniques 1, et connecté, à cet effet, à une antenne 8.

De façon usuelle, un tel système de surveillance et notamment son unité centrale 7 sont conçus de façon à informer le conducteur de toute variation anormale des paramètres mesurés par les capteurs associés aux roues 2.

A cet effet, de tels systèmes de surveillance sont conçus de façon que chaque boîtier électronique 1 transmette périodiquement une trame de données a (figure 3a) incorporant notamment :
- le code d'identification du dit boîtier,
- pour chaque capteur de mesure, une donnée représentative de l'état physique du dit capteur,
- et les valeurs des paramètres mesurés par chaque capteur de mesure entre deux transmissions.

De plus, l'unité de calcul 4 de chaque boîtier électronique 1 est programmée pour, tel que représenté à la figure 3a, émettre des trains A de trames de données a, consistant à émettre successivement n fois la dite trame de données a (dans le cas représenté n=3).

Le procédé de contrôle selon l'invention consiste à déclencher l'ouverture de fenêtres temporelles d'analyse lors de chaque émission de trains A de trames de données, chaque fenêtre d'analyse ouverte couvrant une période de temps prédéterminée précédent le dit déclenchement.

Durant chacune de ces fenêtres d'analyse, ce procédé de contrôle consiste, en premier lieu, à analyser, lors de la transmission de chaque train A de trames de données, le nombre m de trames de données (a) effectivement acquises par l'unité centrale 7, de façon à déduire de ces analyses, au terme de chaque fenêtre d'analyse, un taux de réception Tr représentatif du rapport Σm / Σn = somme des trames acquises / somme des trames dont l'émission est commandée.

A titre d'exemple, la figure 3b représente un mode de réception dégradé de l'unité centrale, dans lequel une seule ou deux trame(s) de données (a) est (sont) effectivement acquise(s) par l'unité centrale 7, lors de chaque émission de trains (A) de trois trames de données.

Chaque taux de réception Tr ainsi déterminé est comparé à une valeur seuil en deçà de laquelle l'unité centrale 7 est programmée pour délivrer un signal destiné à informer le conducteur de la nécessité de procéder au changement du boîtier électronique 1 à l'origine des transmissions.

L'évolution de ce taux de réception Tr est représentée à titre d'exemple à la figure 3c sur laquelle :
- l'échelle des temps t représente plusieurs années de fonctionnement, du fait que la durée de vie usuelle d'une pile 5 est de l'ordre de 10 ans,
- la valeur seuil est égale à 20%.

Durant chaque fenêtre d'analyse, le procédé de contrôle selon l'invention consiste également à analyser, pour chaque capteur de mesure et pour chaque trame de données transmise, la donnée représentative de l'état physique du dit capteur de mesure, de façon à déduire de ces analyses, au terme de chaque fenêtre d'analyse, un taux d'erreur Te représentatif du pourcentage de trames de données incorporant une donnée d'état physique représentative d'un défaut physique.

Chaque taux d'erreur Te ainsi déterminé est comparé à une valeur seuil au dessus de laquelle l'unité centrale 7 est programmée pour délivrer un signal destiné à informer le conducteur de la nécessité de procéder au changement du boîtier électronique 1 à l'origine des transmissions.

L'évolution de ce taux d'erreur Te est représentée à titre d'exemple à la figure 2 sur laquelle la valeur seuil est égale à 20 %.

Grâce au suivi combiné de la valeur du taux de réception Tr et du taux d'erreur Te, le procédé selon l'invention permet donc :
- de contrôler l'évolution de l'état de la pile 5 et des capteurs de mesure intégrés dans les boîtiers électroniques 1,
- et de diagnostiquer, à titre préventif, grâce à ce suivi, l'état de fin de vie de la pile 5 et les défaillances totales des capteurs de mesure, et de prévenir ainsi de la nécessité qui s'en suit de procéder au changement de ces boîtiers électroniques 1.

## Revendications

1. Procédé de contrôle des caractéristiques de fonctionnement d'un boîtier électronique (1) destiné à équiper une roue (2) d'un véhicule (3) et adapté pour émettre, à destination d'une unité centrale (7) montée sur le dit véhicule, des trames de données (a) représentatives de paramètres de fonctionnement de la dite roue selon une procédure d'émission de trains (A) de trames (a), consistant à commander n émissions successives de chaque trame de données (a), le dit procédé de contrôle étant **caractérisé en ce qu'**il consiste :
• à analyser, lors de l'émission de chaque train (A) de trames, le nombre m de trames de données (a) effectivement acquises par l'unité centrale (7) de façon à déduire des analyses successives un taux de réception Tr représentatif du rapport Σm / Σn : somme des trames acquises / somme des trames dont l'émission a été commandée,
• et à commander l'émission, par l'unité centrale (7), d'une information préventive lorsque le taux de réception Tr devient inférieur à un seuil de réception prédéterminé.

2. Procédé de contrôle selon la revendication 1, **caractérisé en ce que** l'on détermine des fenêtres temporelles d'analyse d'une durée prédéterminée, au terme de chacune desquelles on calcule un taux de réception Tr correspondant aux trames (a) émises lors de la dite fenêtre d'analyse.

3. Procédé de contrôle selon la revendication 2, **caractérisé en ce que** l'on déclenche l'ouverture d'une fenêtre d'analyse lors de chaque émission d'un train (A) de trames de données (a), chaque fenêtre d'analyse ouverte couvrant une période de temps prédéterminée précédent le dit déclenchement.

4. Procédé de contrôle des caractéristiques de fonctionnement d'un boîtier électronique (1) selon l'une des revendications 1 à 3, le dit boîtier intégrant au moins un capteur de mesure, et étant adapté pour détecter les éventuels défauts physiques de chaque capteur de mesure et pour émettre des trames de données (a) comportant, pour chaque capteur, une donnée représentative de l'état physique du dit capteur, le dit procédé de contrôle étant **caractérisé en ce qu'**il consiste, pour chaque capteur de mesure :
• pour chaque trame (a) de données transmise, à analyser la donnée représentative de l'état physique du dit capteur de mesure, de façon à déduire des analyses successives un taux d'erreur Te représentatif du pourcentage de trames de données (a) incorporant une donnée d'état physique représentative d'un défaut physique,
• et à commander l'émission, par l'unité centrale (7), d'une information préventive lorsque le taux d'erreur Te devient supérieur à un seuil d'erreur prédéterminé.

## Claims

1. Method for controlling the operating characteristics of an electronic control unit (1) to be fitted to a wheel (2) of a vehicle (3) and designed to send, to a central unit (7) on said vehicle, data frames (a) representing the operating parameters of said wheel using a transmission procedure for streams (A) of frames (a), involving commanding n successive transmissions of each data frame (a), said control method being **characterised in that** it involves:
- analysing, during transmission of each stream (A) of frames, the number m of data frames (a) actually captured by the central unit (7) such as to calculate from subsequent analysis a receive rate Tr representing the ratio Em/En: sum of the frames captured / sum of frames whose transmission was commanded,
- and commanding the transmission, by the central unit (7), of a preventive message when the receive rate Tr drops below a predetermined receive threshold.

2. Control method according to claim 1, **characterised in that** analysis time windows of a predetermined duration are determined, at the end of each of which a receive rate Tr corresponding to the frames (a) sent during said analysis window is calculated.

3. Control method according to claim 2, **characterised in that** the opening of an analysis window is triggered during each transmission of a stream (A) of data frames (a), each open analysis window covering a predetermined time period preceding said trigger.

4. Method for controlling the operating characteristics of an electronic control unit (1) according to one of claims 1 to 3, said unit including at least one measurement sensor, and being designed to detect any physical faults of each measurement sensor and to send data frames (a) comprising, for each sensor, a datum representing the physical state of said sensor, said control method being **characterised in that** it involves, for each measurement sensor:
- for each data frame (a) sent, analysing the datum representing the physical state of said measurement sensor, such as to calculate from subsequent analyses an error rate Te representing the percentage of data frames (a) incorporating a physical state datum representing a physical fault,
- and commanding the transmission, by the central unit (7), of a preventive message when the error rate Te exceeds a predetermined error threshold.

## Patentansprüche

1. Verfahren zur Steuerung von Betriebsfunktionen eines elektronischen Gehäuses (1), mit dem ein Rad (2) eines Fahrzeugs (3) ausgerüstet werden soll und das dafür eingerichtet ist, an eine Zentraleinheit (7), die im Fahrzeug installiert ist, Datenrahmen (a) zu senden, die Funktionsparametern des Rads entsprechen, nach einem Verfahren zum Senden einer Reihe von (A) Rahmen (a), das darin besteht, n aufeinanderfolgende Sendevorgänge für jeden Datenrahmen (a) anzuweisen, wobei das Verfahren zur Steuerung **dadurch gekennzeichnet ist, dass** es in Folgendem besteht:
• während des Sendens jeder Reihe (A) von Rahmen Analysieren der Anzahl m der Datenrahmen (a), die tatsächlich von der Zentraleinheit (7) empfangen wurden, um aus den aufeinanderfolgenden Analysen eine Empfangsrate Tr abzuleiten, die dem Verhältnis Σm / Σn entspricht: Summe der empfangenen Rahmen / Summe der Rahmen, deren Übertragung angewiesen wurde,
• und Anweisen des Sendens einer Vorsorgeinformation durch die Zentraleinheit (7), wenn die Empfangsrate Tr unter einen festgelegten Empfangsschwellenwert fällt.

2. Verfahren zur Steuerung nach Anspruch 1, **dadurch gekennzeichnet, dass** Analyse-Zeitfenster mit einer bestimmten Dauer festgelegt werden, wobei jeweils am Ende jedes dieser Fenster eine Empfangsrate Tr berechnet wird, die den Rahmen (a) entspricht, die während des Analyse-Zeitfensters gesendet wurden.

3. Verfahren zur Steuerung nach Anspruch 2, **dadurch gekennzeichnet, dass** bei jedem Sendevorgang einer Reihe (A) von Datenrahmen (a) das Öffnen eines Analysefensters ausgelöst wird, wobei jedes offene Analysefenster einen bestimmten Zeitraum vor der Auslösung umfasst.

4. Verfahren zur Steuerung von Betriebsfunktionen eines elektronischen Gehäuses (1) nach einem der Ansprüche 1 bis 3, wobei in dem Gehäuse mindestens ein Messfühler integriert ist und es dafür eingerichtet ist, mögliche physikalische Fehler jedes Messfühlers zu erkennen und Datenrahmen (a) zu senden, die für jeden Messfühler eine Größe umfassen, die dem physikalischen Zustand des Messfühlers entspricht, wobei das Verfahren zur Steuerung **dadurch gekennzeichnet ist, dass** es für jeden Messfühler in Folgendem besteht:
• für jeden übertragenen Datenrahmen (a) Analysieren der Größe, die dem physikalischen Zustand des Messfühlers entspricht, um aus den aufeinanderfolgenden Analysen eine Fehlerrate Te abzuleiten, die dem Prozentsatz der Datenrahmen (a) entspricht, die eine Größe für den physikalischen Zustand enthalten, die einem physikalischen Fehler entspricht,
• und Anweisen des Sendens einer Vorsorgeinformation durch die Zentraleinheit (7), wenn die Fehlerrate Te einen festgelegten Fehlerschwellenwert übersteigt.
